# DEMANDE DE BREVET EUROPEEN

(11) **EP 4 686 158 A1**
(43) Date de publication de la demande: **28.01.2026**
(21) Numéro de dépôt: 25189190.9
(22) Date de dépôt: 11.07.2025
(51) Int. Cl.: H04L 25/02

(54) **CLASSIFIEUR LOS/NLOS A DOUBLE ÉTAGE**

(30) Priorité: 26.07.2024 FR 2408344
(71) Demandeur: STMicroelectronics International N.V., 1228 Plan-les-Ouates, Geneva (CH)
(72) Inventeur: DUPEYROUX, Julien, 38500 La Buisse (FR); JAMMES, Fabien, 73100 Brison Saint Innocent (FR)
(74) Mandataire: Casalonga

(57) **Abrégé**

Un classifieur LOS/NLOS multi-environnements 24 est proposé dans un dispositif de télémétrie ULB. Il présente deux étages : un classifieur d'environnement (241) et un classifieur LOS/NLOS (242). Le classifieur d'environnement comprend un CNN (241a) alimenté par la CIR d'un signal radio reçu, en cascade avec un MLP (241b) également alimenté par un jeu (SET_1) de caractéristiques statistiques extraites de la CIR par une unité dédiée (23). Le classifieur d'environnement fournit une classe d'environnement (ENV_ID) au classifieur LOS/NLOS, typiquement un LP recevant en outre en entrée la sortie du CNN et un autre jeu (SET_2) de caractéristiques statistiques et physiques extraites de la CIR. La classe d'environnement (ENV_ID) peut former une entrée de modèle du MLP opérant comme classifieur LOS/NLOS, ou être un paramètre de modulation du MLP, typiquement un biais ou un facteur de modification de poids du MLP.

## Description

### DOMAINE TECHNIQUE

Des modes de réalisation et de mise en œuvre concernent le domaine des communications sans fil, et plus particulièrement celui de la détermination d'une visibilité directe (« line-of-sight » ou LOS en langue anglosaxonne) ou indirecte (« non-line-of-sight » ou NLOS en langue anglosaxonne) dans des environnements sans fil, tels que des environnements Ultra Large Bande ou ULB.

### CONTEXTE TECHNIQUE

La transmission de données en Ultra Large Bande ULB utilise des impulsions de radiofréquence très courtes (souvent inférieure à la nanoseconde), sur une grande bande passante de l'ordre de 500 MHz ou plus. Les communications ULB (ou UWB pour « ultra wideband » en langue anglosaxonne) opèrent à des fréquences comprises entre 3,1GHz et 10,6GHz, par exemple dans une première bande entre 3,1GHz et 4,8GHz ou une deuxième bande entre 6GHz et 8,5GHz.

L'une des principales applications de la technologie ULB est la mesure de distance et la localisation de dispositifs mobiles. Une telle application permet la mise en place de nombreux services.

Une condition à l'obtention de mesures et localisations précises est de savoir si le trajet d'un signal radio entre l'émetteur et le récepteur du signal radio de mesure (typiquement un équipement du réseau ULB dénommé « ancre », et un dispositif mobile dénommé « tag ») est une ligne droite non obstruée, c'est-à-dire en visibilité directe « LOS » (pour « Line Of Sight » en langue anglosaxonne), ou si le trajet du signal radio n'est pas une ligne droite non obstruée, c'est-à-dire en visibilité indirecte « NLOS » (pour Non-LOS).

Plus généralement, une absence de visibilité directe (NLOS) correspond à toute configuration dans laquelle la ligne directe reliant l'émetteur au récepteur traverse un obstacle dont les propriétés physiques sont susceptibles de retarder les signaux, de les déformer ou de les bloquer complètement.

Aussi, l'identification d'une visibilité directe ou indirect, ci-après LOS/NLOS, constitue un enjeu important, puisqu'elle permet d'atténuer ou corriger les erreurs de mesures distance voire de rejeter les mesures.

L'identification LOS/NLOS peut être réalisée à partir de mesures du canal ULB, telles que la réponse impulsionnelle du canal « CIR » (pour « Channel Impulse Response » en langue anglosaxonne). Les méthodes d'identification LOS/NLOS détectent notamment des caractéristiques du canal en analysant la CIR, par exemple la diminution d'amplitude ou l'importance d'un retard.

Il est connu d'utiliser des modèles de classification LOS/NLOS (« classifieurs » ou « classificateurs ») basés sur l'intelligence artificielle telle que l'apprentissage automatique (ou « machine learning » en langue anglosaxonne). Ces modèles ont par exemple appris à reconnaitre des caractéristiques propres aux chemins NLOS au sein des CIR, compte tenu du bruit environnemental.

Néanmoins, les chemins NLOS et le bruit environnemental varient excessivement d'un environnement à l'autre, par exemple entre des bureaux en intérieur, des entrepôts et/ou un parking extérieur.

C'est pourquoi il est connu jusqu'à présent d'utiliser des modèles de classification spécialisés, c'est-à-dire spécifiques à l'environnement considéré.

Une dégradation significative des performances du même modèle est constatée lorsqu'il est appliqué à un autre environnement.

Par ailleurs, les tentatives d'obtenir un modèle de classification multi-environnements se sont avérées vaines ; les performances s'étant révélées médiocres.

La publication « Improving Deep Learning-Based UWB LOS/NLOS Identification with Transfer Learning: An Empirical Approach » (JiWoong Park et al., 2020) propose d'utiliser les modèles existants de classification / identification LOS/NLOS dans un environnement inconnu, en les mettant à jour, par apprentissage par transfert (« transfer learning » en langue anglosaxonne) pour les adapter au nouvel environnement avec peu de données et un temps d'apprentissage court.

Cependant, il demeure qu'un nouvel apprentissage et donc un nouveau modèle sont nécessaires pour chaque environnement distinct si l'on souhaite conserver de bonnes performances.

Cette situation n'est pas satisfaisante compte tenu de la réalité des usages et applications souhaités dans lesquels les dispositifs traversent, lors de leur progression, différents types d'environnement. C'est par exemple le cas d'applications dans le domaine automobile avec le suivi de la clé (tag ULB) pour déverrouiller ou verrouiller automatiquement la porte du véhicule en fonction de la distance de l'utilisateur, alors que ce dernier peut évoluer à l'air libre, dans son garage, dans les pièces de son domicile, etc.

D'autres applications concernent les robots d'assistance dans l'industrie, confrontés à des environnements très variées ; les robots de livraison du dernier kilomètre en zone urbaine ; les robots d'exploration par exemple pour localiser et/ou cartographier des zones sous-marines.

### RESUME

Il existe par conséquent le besoin d'une classification LOS/NLOS multi-environnements améliorée en ce qu'elle offre des résultats robustes. Dans ce dessein, il est envisagé de moduler le modèle de classification par une information d'environnement obtenue dynamiquement de l'utilisation en cours. Aussi, un modèle de classification multi-environnements peut être entrainé et utilisé.

Selon un aspect, il est ainsi proposé un dispositif électronique comprenant :
une unité de communication configurée pour recevoir un signal radio et
obtenir une réponse impulsionnelle de canal (CIR) à partir du signal radio,
une unité de pré-classification configurée pour classer un environnement du dispositif électronique recevant le signal radio, et un modèle d'intelligence artificielle (IA) de classification LOS/NLOS configuré pour déterminer une visibilité directe (LOS) ou indirecte (NLOS) en fonction de la CIR et de la classe d'environnement déterminée par l'unité de pré-classification. Les modèles d'IA présentent l'avantage de permettre un apprentissage automatique pour obtenir naturellement de bonnes performances.

En modulant le modèle d'apprentissage automatique selon la classe d'environnement déterminée, on obtient un modèle qui présente de bonnes performances de classification LOS/NLOS tout en permettant une généralisation à plusieurs scénarios environnementaux.

En effet, il découle de cette architecture que la classe d'environnement peut être incluse dans les données d'apprentissage, et que par conséquent, le modèle de classification apprend également l'environnement et devient sensible à celui-ci.

Le signal radio est par exemple un signal Ultra Large Bande (ULB), typiquement utilisé dans des applications de mesure de distances et de localisation.

Selon un autre aspect, il est proposé un procédé de communication comprenant les étapes suivantes, dans un dispositif électronique :
obtenir une réponse impulsionnelle de canal (CIR) à partir d'un signal radio reçu,
déterminer une classe d'environnement classant un environnement du dispositif électronique recevant le signal radio, et
utiliser un modèle de classification pour déterminer une visibilité directe (LOS) ou indirecte (NLOS) en fonction de la CIR et de la classe d'environnement déterminée.

Des caractéristiques facultatives de modes de réalisation sont définies ci-après en référence au dispositif, tandis qu'elles peuvent être transposées en caractéristiques de procédé.

Dans un mode de réalisation, l'unité de pré-classification comprend un modèle d'IA de classification d'environnement configuré pour déterminer une classe d'environnement du dispositif électronique à partir de la CIR. Cette disposition permet avantageusement d'utiliser seulement l'unité de communication et une même mesure (la CIR) pour l'ensemble des classifications.

Il est possible cependant, en variantes, d'utiliser des moyens additionnels, autres qu'un modèle d'IA. Par exemple, une caméra couplée à un processeur identifiant des caractéristiques d'environnement peuvent être utilisés.

Dans un mode de réalisation, l'unité de pré-classification comprend un réseau neuronal convolutif (CNN pour « Convolutional Neural Network » en langue anglosaxonne) en cascade avec un modèle d'IA de classification d'environnement du dispositif électronique configuré pour déterminer une classe d'environnement, le CNN recevant en entrée la CIR. Cette disposition permet de tirer profit de performances élevées des CNN pour l'identification des caractéristiques géométriques dans la CIR aux fins d'une classification d'environnement de qualité élevée.

Selon une caractéristique particulière, le modèle d'IA de classification d'environnement reçoit, outre la sortie du CNN, un premier jeu de caractéristiques extraites de la CIR. Cette disposition permet de tirer profit de caractéristiques mathématiques connues facilement identifiables, lors de la classification d'environnement. Le premier jeu de caractéristiques pour une classification d'environnement comprend typiquement des caractéristiques de nature statistique (de la CIR), e.g. moyenne, écart type, coefficient d'asymétrie (ou « skewness » en langue anglosaxonne"), coefficient d'acuité (ou « kurtosis » en langue anglosaxonne), rapport signal sur bruit, etc.

Selon une caractéristique particulière, le CNN et le modèle d'IA de classification d'environnement sont entraînés conjointement, à partir d'un ensemble de données labelisant des CIRs avec des classes d'environnement. L'apprentissage conjoint permet de ne pas figer les sorties du CNN au préalable, lesquelles sont donc apprises. Cette disposition offre par conséquent une plus grand souplesse dans la définition (par apprentissage) des sorties du CNN, et donc de meilleurs résultats de classification des environnements.

Dans un mode de réalisation, le modèle de classification LOS/NLOS reçoit en entrée la sortie du CNN et un deuxième jeu de caractéristiques extraites de la CIR. Cette disposition permet de tirer profit de caractéristiques mathématiques connues facilement identifiables, lors de la classification LOS/NLOS. Le deuxième jeu de caractéristiques pour une classification LOS/NLOS comprend typiquement des caractéristiques de nature statistique et des caractéristiques de nature physique (sur la CIR), e.g. énergie totale, pics, pente de front montant, etc.

Selon une autre caractéristique particulière, le modèle de classification LOS/NLOS est entraîné, une fois le CNN et le modèle d'IA de classification d'environnement entraînés.

Dans un mode de réalisation, la classe d'environnement déterminée est fournie comme entrée de modèle du modèle d'IA de classification LOS/NLOS. Cette disposition s'applique avantageusement à tout type de classifieur à apprentissage automatique, qu'il soit de type réseau de neurones, K-plus proche voisin, machine à vecteurs de support, arbre de décision, etc. Elle permet notamment une intégration aisée dans le classifieur choisi.

Dans un autre mode de réalisation, la classe d'environnement déterminée est fournie comme paramètre de modulation du modèle d'IA de classification LOS/NLOS, par exemple comme biais ou comme facteur de modification du poids d'une ou plusieurs connexions (typiquement de toutes les connexions) dans un réseau neuronal formant modèle d'IA de classification LOS/NLOS.

Cette configuration évite l'ajout d'une entrée dans le réseau, ce qui d'une part réduit la taille du réseau neuronal par comparaison, et d'autre part, rend l'apprentissage plus rapide, donc convergeant plus rapidement. Enfin, on réduit le risque de surapprentissage.

### BREVE DESCRIPTION DES FIGURES

D'autres avantages et caractéristiques de l'invention apparaîtront à l'examen de la description détaillée de mode de réalisation et de mise en œuvre, nullement limitatifs, et des dessins annexés sur lesquels :
[Fig. 1];
[Fig. 2] ;
[Fig. 3];
[Fig. 4] ;
[Fig. 5] ; et
[Fig. 6] illustrent schématiquement des modes de mise en œuvre et de réalisation de l'invention.

### DESCRIPTION DETAILLEE

La technologie à bande ultra-large (ULB ou UWB) a trouvé de nombreuses applications dans divers domaines ayant trait à la mesure de distance et/ou la localisation d'objets mobiles.

Les normes IEEE 802.15.4 et 802.15.4z fournissent divers détails sur les protocoles de communication ULB. Des déclinaisons des protocoles de communication ULB sont proposés pour divers services de télémétrie (« Ranging » en langue anglosaxonne), telles le protocole FiRa (signifiant "télémétrie fine") décrit au travers de plusieurs spécifications techniques dont la suivante : "FIRA MEDIUM ACCESS CONTROL (MAC) TECHNICAL SPECIFICATION", VERSION 2.0.0.

D'autres protocoles de communication peuvent utiliser la fréquence ULB, notamment la norme IEEE 802.11ax (et les suivantes).

La problématique de la classification LOS/NLOS, à savoir si le trajet d'un signal radio est une ligne droite non obstruée, « en visibilité directe » ou LOS, ou bien n'est pas une telle ligne droite non obstruée et donc « en visibilité indirecte » ou NLOS, n'est pas propre à la technologie ULB mais à toute fréquence radio.

Néanmoins, la technologie ULB, de par ses multiples applications de télémétrie, est un terrain privilégié pour la mise en place de classification LOS/NLOS de haute précision.

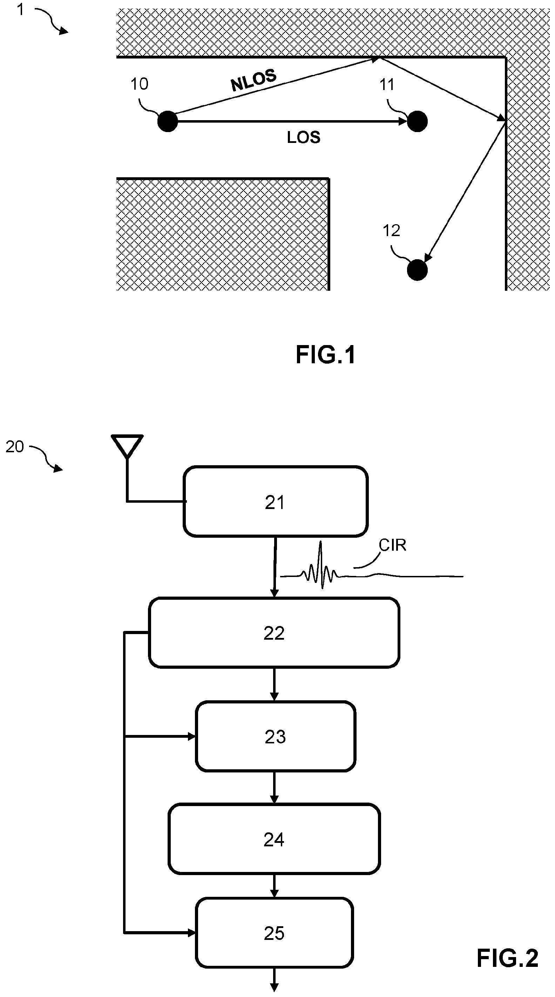

La **Figure 1** illustre un système ULB 1 dans lequel deux dispositifs ULB communiquent l'un avec l'autre, typiquement pour une application de télémétrie. Le système ULB 1 peut être un système de télémétrie bidirectionnelle FiRa.

Un premier dispositif FiRa 10, appelé « Controller » ou contrôleur, définit et contrôle les fonctions de télémétrie en envoyant un message de contrôle, et un deuxième dispositif FiRa 11, 12, appelé contrôlé ou « Controlee », utilise les fonctions de télémétrie telles qu'elles ont été configurées par le message de contrôle du contrôleur dans un mode un-à-un. Un plus grand nombre de contrôlés peut être présent dans un mode de télémétrie "un à plusieurs".

Dans une application de télémétrie ULB, lorsque le premier dispositif 10 émet un signal à haute fréquence en direction du deuxième dispositif 11 ou 12, l'emplacement exact du deuxième dispositif 11, 12 peut être calculé en mesurant le temps de vol de ce signal.

Dans un environnement où aucun obstacle n'entrave la communication entre le premier dispositif 10 et le second dispositif 11, il y a une situation de visibilité directe LOS dans laquelle les signaux à haute fréquence sont directement transmis de l'un à l'autre.

Dans un autre environnement où un obstacle entrave la communication entre le premier dispositif 10 et le second dispositif 12, le signal haute fréquence est réfléchi sur une ou plusieurs surfaces pour atteindre le second dispositif 12.

Dans les communications radio, en particulier, ULB, il est important d'identifier précisément les situations de LOS et de NLOS, afin par exemple de compenser des erreurs de mesure de télémétrie.

La **Figure 2** illustre un dispositif électronique 20 participant à des opérations de télémétrie. Il peut s'agir de l'un quelconque des dispositifs 10, 11, 12 de la Figure 1.

Le dispositif 20 comporte une unité de communication 21, une unité de pré-traitement 22, une unité d'extraction 23, une unité de classification 24 et une unité de télémétrie 25.

L'unité de communication 21, reliée à une ou plusieurs antennes, est typiquement une unité émettrice-réceptrice ULB composée d'une partie émettrice et d'une partie réceptrice. On s'intéresse ici à la partie réceptrice responsable de la réception des signaux radio d'une trame ULB transmise par un autre dispositif. Une trame ULB est généralement constituée d'impulsions dont la forme est conçue pour une application de télémétrie.

L'antenne de réception capte le signal radio ULB, lequel après des traitements non illustrés (filtre passe-bande, amplification, etc.), est converti en réponse impulsionnelle de canal (CIR). La CIR peut être construite en accumulant des CIR élémentaires (à faible énergie) sur les multiples impulsions formant la trame ULB, afin d'obtenir une CIR significative. Chaque CIR élémentaire correspond à la réponse d'une seule impulsion de la trame ULB envoyée. Le CIR correspond aux réponses agrégées de toutes les impulsions formant la trame ULB transmise.

L'unité de pré-traitement 22 procède à un pré-traitement (optionnel) de la CIR pour améliorer les performances de télémétrie par l'unité de télémétrie 25. A titre d'exemple, des opérations de filtrage pour débruiter le signal ou supprimer des données aberrantes, de sous-échantillonnage, de recadrage peuvent être appliquées.

La CIR traitée est alors utilisée par l'unité de télémétrie 25 pour déterminer un temps de trajet ou vol (Time of Flight ou ToF) du signal et en déduire par exemple une distance, voire une localisation du dispositif 20 ou du dispositif avec lequel il échange. Les calculs de télémétrie sont connus de l'homme de l'art et ne sont par conséquent pas décrits plus en détails ici.

Ces calculs de télémétrie comprennent cependant des opérations de correction qui peuvent venir compenser les temps de trajet selon que la situation de communication soit LOS ou NLOS.

Aussi, la CIR est utilisée par l'unité d'extraction 23 pour extraire des caractéristiques d'intérêt, notamment des caractéristiques statistiques de la CIR, telles que la moyenne du signal, l'écart type, un coefficient d'asymétrie S (ou skewness), un coefficient d'acuité K (ou kurtosis), un rapport signal sur bruit, une moyenne de retard (retard moyen de tous les chemins identifiés sur la CIR), la dispersion de retard, etc., et des caractéristiques physiques de la CIR, telles que l'énergie totale, l'amplitude maximale du signal (pic principal), la pente (ou temps de montée) de front montant pour les pics de la CIR, l'énergie normalisée du chemin le plus robuste, l'index du premier échantillon de la CIR significativement au-dessus du bruit, etc.

Ces caractéristiques sont utilisées par l'unité de classification 24, avec la CIR, pour déterminer le type de situation rencontrée, à savoir LOS ou NLOS. Le type LOS ou NLOS est indiqué à l'unité de télémétrie 25 pour procéder aux ajustements idoines.

Il est connu d'utiliser des classifieurs d'apprentissage automatique (i.e., des modèles d'IA) comme unités de classification 24. Néanmoins, pour être robuste, ces classifieurs sont entraînés avec des jeux de données spécifiques à un environnement particulier.

On entend par environnement, le contexte dans lequel les mesures sont effectuées. L'environnement est défini par l'ensemble des éléments qui viennent perturber ou interagir avec les signaux radio, que ce soient des obstacles, des surfaces de réflexion ou l'absence de tels éléments. Ces éléments varient fortement d'un environnement à l'autre, par exemple de bureaux en intérieur à des entrepôts, en passant par un parking extérieur.

L'environnement dans lequel fonctionne le système ULB influence considérablement ses performances, mais également les caractéristiques mêmes de la CIR. C'est pourquoi les classifieurs sont entraînés avec des jeux de données spécifiques à leur environnement d'application.

Néanmoins, les dispositifs 10, 11, 12 peuvent être amenés à progresser dans différents environnements au cours d'une même opération. Par exemple, des opérations de cartographie d'un site peuvent conduire un robot de cartographie à effectuer des mesures dans des environnements intérieurs, extérieurs, aux caractéristiques très différentes.

L'utilisation d'un unique classifieur serait avantageuse dans la mesure où l'espace mémoire requis serait compatible avec des microprocesseurs embarqués dans des robots.

Dans cette perspective, il est proposé un nouveau type de classifieur à double étage, l'un pour déterminer le type d'environnement et l'autre, classifieur LOS/NLOS, dépendant du type d'environnement déterminé et entraîné avec cette information.

Un dispositif 10, 11, 12 présente ainsi, outre l'unité de communication 21 configurée pour recevoir le signal radio et obtenir la CIR à partir du signal radio, une unité de pré-classification configurée pour classer un environnement du dispositif électronique recevant le signal radio, et un classifieur LOS/NLOS - typiquement un modèle d'intelligence artificielle (IA) - configuré pour déterminer une visibilité directe (LOS) ou indirecte (NLOS) en fonction de la CIR et de la classe d'environnement déterminée par l'unité de pré-classification.

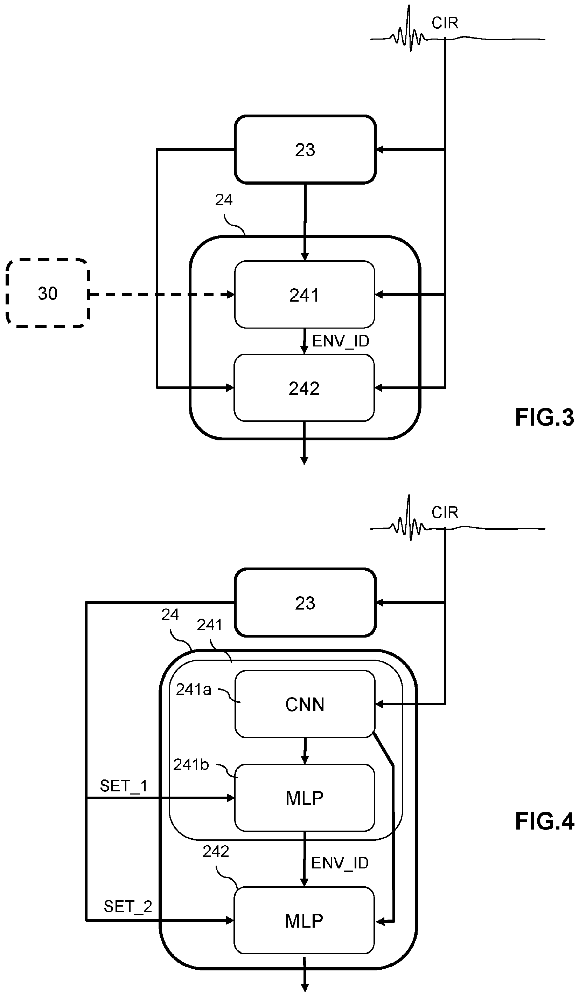

La **Figure 3** illustre une unité de classification 24 selon des modes de réalisation. Bien que l'unité de classification 24 puisse recevoir en entrée uniquement la CIR, la Figure envisage une configuration avec l'unité d'extraction 23 pour fournir à l'unité de classification 24 des caractéristiques statistiques et physiques déjà extraites de la CIR, en plus de la CIR.

La Figure illustre la mise en cascade d'un premier classifieur d'environnement 241 avec un deuxième classifieur LOS/NLOS 242, dans laquelle la classe d'environnement ENV_ID déterminée par le premier classifieur 241 est utilisée en entrée du deuxième classifieur 242. Le classifieur 24 est ainsi à double étage.

Le classifieur d'environnement 241 est typiquement un modèle d'IA configuré (et entrainé) pour déterminer une classe d'environnement du dispositif électronique à partir de la CIR, directement de la CIR et/ou à l'aide de caractéristiques extraites de la CIR par l'unité d'extraction 23. Le classifieur d'environnement 241 permet notamment de pré-classifier les signaux radio ULB au regard de l'environnement de progression du dispositif de mesure.

Dans des modes de réalisation, les classes d'environnement peuvent être en nombre limité pour des contextes très différents, correspondant par exemple à des scénarios dans lesquels on peut s'attendre à des niveaux de bruit très différents, dus par exemple à des réflexions multiples, et à des probabilités distinctes de distorsion et/ou d'occultation du signal. Ces classes d'environnement prédéfinies peuvent être mises en place avec des modèles d'IA de classification entraînés de manière supervisée, ou avec des modèles mathématiques conventionnels.

Dans d'autres modes de réalisation, aucune classe d'environnement n'est prédéfinie, lesdites classes d'environnement étant déterminées par le modèle d'IA de classification entraîné de manière non-supervisée. Ces autres modes de réalisation présentent l'avantage d'étendre les classes d'environnement au-delà de ce que l'être humain peut percevoir des CIRs, et de trouver les classes qui permettent de moduler au mieux le classifieur LOS/NLOS.

A titre d'exemple, les classes d'environnement suivantes peuvent être prédéfinies :
classe 1 : extérieur, champ ouvert avec peu de bruit. C'est typiquement un terrain vague ou un champ ;
classe 2 : extérieur, champ ouvert avec bruit élevé. C'est typiquement un centre-ville urbain, un parking, une zone d'habitation/d'immeubles ;
classe 3 : intérieur, type industriel. C'est typiquement un entrepôt, une zone ou usine de fabrication, un parking souterrain ;
classe 4 : intérieur, espace public. C'est typiquement un espace ouvert, un musée, un centre commercial ;
classe 5 : intérieur, espace privé. C'est typiquement un intérieur de maison.

En variante, un nombre plus faible de classes peut être utilisé dans le cadre d'applications particulières. Par exemple, dans le cadre automobile, les classes suivantes peuvent être définies :
classe 1 : intérieur, espace privé, par exemple un garage privé ;
classe 2 : intérieur, espace industriel, par exemple un garage automobile ;
classe 3 : extérieur, champ ouvert avec bruit élevé.

Bien entendu, un nombre différent de classes peut être envisagé.

Par ailleurs, si l'identifiant de classe ENV_ID peut être un nombre entier comme indiqué ci-dessus, dans certains modes de réalisation, il peut s'agir d'une valeur de vraisemblance (éventuellement logarithmique) ou un pourcentage. De telles valeurs non entières permettent notamment une modulation plus précise du deuxième classifieur 242.

Le modèle d'IA de classification d'environnement peut être tout type de classifieur traditionnel basé sur l'apprentissage automatique, tel qu'un algorithme KNN de plus proche voisin (K-nearest neighborhood), un classifieur Ridge, un arbre de décision, un algorithme de forêt aléatoire, un algorithme AdaBoost, un classifieur gaussien naïf Bayesien. En variante, il peut être réalisé à l'aide d'un modèle de réseau neuronal à progression lente, par exemple un perceptron multicouche (MLP), un réseau neuronal convolutif (CNN), un réseau neuronal récurrent (RNN) ou toute combinaison de ces modèles standard.

En variante à l'utilisation d'un modèle d'IA, des capteurs 30 classiques permettant de déterminer l'environnement peuvent être utilisés, comme représenté en pointillés sur la Figure. Par exemple, une caméra associée à un processeur identifiant des caractéristiques d'environnement permet d'obtenir une classe d'environnement.

Le classifieur LOS/NLOS 242 reçoit donc la classe d'environnement ENV_ID déterminée par le classifieur d'environnement 241. Le classifieur LOS/NLOS 242 est configuré (entraîné) pour déterminer une situation LOS ou une situation NLOS en fonction de la CIR (directement et/ou via des caractéristiques extraites) et de la classe d'environnement ENV_ID.

De façon similaire au premier classifieur 241, le classifieur LOS/NLOS 242 peut être tout type de classifieur traditionnel basé sur l'apprentissage automatique, tel qu'un algorithme KNN de plus proche voisin (K-nearest neighborhood), un classifieur Ridge, un arbre de décision, un algorithme de forêt aléatoire, un algorithme AdaBoost, un classifieur gaussien naïf Bayesien. En variante, il peut être réalisé à l'aide d'un modèle de réseau neuronal à progression lente, par exemple un perceptron multicouche (MLP), un réseau neuronal convolutif (CNN), un réseau neuronal récurrent (RNN) ou toute combinaison de ces modèles standard.

La classe d'environnement ENV_ID peut être considérée comme une entrée additionnelle du modèle de classification 242, par exemple comme un neurone ou nœud additionnel dans la première couche d'un réseau de neurones. Dans ce cas-là, la classe d'environnement déterminée ENV_ID est fournie comme entrée de modèle du modèle d'IA de classification LOS/NLOS 242. Exploiter la classe ENV_ID comme une entrée additionnelle du modèle d'IA présente l'avantage d'une intégration facilitée.

Dans un mode alternatif de réalisation, la classe d'environnement ENV_ID peut être utilisée pour ajuster des paramètres (tels des poids) du modèle de classification 242. Par exemple, elle peut être utilisée comme biais dans un réseau de neurones officiant comme classifieur 242, par exemple biais de tous ou partie des neurones/nœuds, ou être utilisée comme facteur de modification du poids d'une ou plusieurs connexions (typiquement de toutes les connexions) d'un réseau neuronal officiant comme classifieur 242. Il est ainsi possible de pondérer tous ou partie des poids du réseau neuronal par la classe d'environnement ENV_ID (valeur entière ou non). Dans ces cas-là, la classe d'environnement déterminée ENV_ID est fournie comme paramètre de modulation du modèle d'IA de classification LOS/NLOS 242.

L'entraînement du classifieur LOS/NLOS 242 et du classifieur d'environnement 241 le cas échéant est réalisé par apprentissage supervisé à partir d'un jeu de données d'apprentissage, fournissant des CIR et/ou des caractéristiques extraites, ainsi que la classe d'environnement ENV_ID correspondante et l'état LOS/NLOS. De préférence. Toute méthode d'apprentissage supervisé classique peut être utilisée. Dans des modes de réalisation rappelés ci-dessus, un apprentissage non-supervisé peut être utilisé pour le classifieur d'environnement 241 dans le cas où l'on ne souhaite pas prédéfinir les classes d'environnement.

La taille typique du jeu de données varie entre 3 000 et 10 000 échantillons par condition, c'est-à-dire par condition NLOS et ENV_ID. De façon connue, ce jeu peut être divisé en jeu d'entraînement et jeu de validation.

L'entraînement peut être divisée en deux étapes. Premièrement, le classifieur d'environnement 241 est entraîné. Puis, celui-ci est gelée une fois la convergence atteinte, et le classifieur LOS/NLOS 242 est entraîné.

La **Figure 4** illustre une réalisation de l'unité de classification 24.

Dans cette réalisation, le classifieur d'environnement 241 comprend un réseau neuronal convolutif CNN 241a en cascade avec un classifieur de type perceptron multicouche MLP 241b, le réseau neuronal convolutif recevant en entrée la CIR.

Le CNN permet avantageusement d'identifier des caractéristiques géométriques dans la CIR aux fins d'une classification d'environnement de qualité élevée.

A titre d'illustration, le CNN 241a comprend une couche d'entrée, deux couches cachées convolutives, une couche de sortie. La couche d'entrée peut être de taille correspondant au nombre d'échantillons - par exemple 1016 ou 2048 - de la CIR ou au nombre d'échantillons - par exemple 64 à 256 - d'une portion de la CIR focalisée sur la partie énergétique du signal, typiquement 25% avant le pic de la CIR et 75% après. La taille de la couche de sortie dépend de celle d'entrée et des couches intermédiaires. Les couches cachées peuvent mettre en œuvre jusqu'à seize filtres / noyaux de convolution par couche (pour produire seize ou moins images de caractéristiques - ou « feature maps »), de dimension comprise entre 5 et 11, accompagnées chacune d'une couche de pooling appliquant un sous-échantillonnage de facteur 2 par exemple.

Le MLP 241b permet une opération de classification, et ainsi l'obtention de la classe ENV_ID. Le MLP 241b reçoit, outre la sortie du CNN, un premier jeu SET_1 de caractéristiques extraites de la CIR (par l'unité d'extraction 23). Le jeu SET_1 est typiquement formé de caractéristiques statistiques uniquement. Bien entendu, il est possible d'utiliser des caractéristiques physiques en complément.

Le MLP 241b est un perceptron multicouches comportant par exemple une unique couche cachée.

Le CNN 241a et le MLP 241b sont entraînés conjointement, à partir du jeu de données d'apprentissage. Cela permet d'adapter le CNN, en particulier ses sorties, aux besoins de classification d'environnement.

Le classifieur LOS/NLOS 242 est également un perceptron multicouche comportant par exemple une unique couche cachée. Il reçoit en entrée la classe ENV_ID déterminée par le classifieur 241, la sortie du CNN 241a et un deuxième jeu SET_2 de caractéristiques extraites de la CIR (par l'unité d'extraction 23).

Le jeu SET_2 est typiquement formé de caractéristiques statistiques et de caractéristiques physiques. L'intersection entre SET_1 et SET_2 peut être nulle ou non. Par exemple, les caractéristiques statistiques peuvent être identiques, en toutes ou partie.

L'utilisation du même CNN 241a pour le classifieur d'environnement 241 et le classifieur LOS/NLOS 242 réduit la complexité, notamment les besoins en mémoire du dispositif 10, 11, 12. Cette utilisation commune est possible car les CNN servent à identifier des caractéristiques géométriques qui aident à classer les signaux, que ce soit une classification d'environnement ou une classification LOS/NLOS. Bien entendu, il est possible en variante d'utiliser des CNN distincts.

Comme exposé plus haut, le MLP 242 (plus généralement le classifieur LOS/NLOS) est entraîné, une fois le CNN 241a et le MLP 241b entraînés.

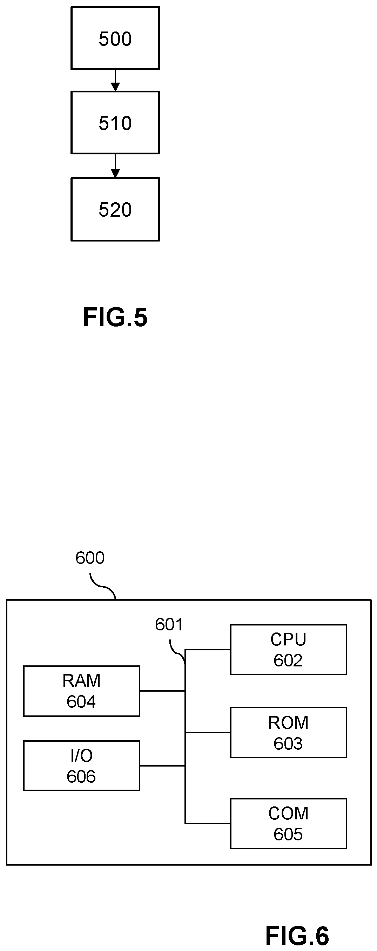

La **Figure 5** illustre, à l'aide d'un ordinogramme, des étapes d'un procédé de communication. Si lors d'opérations de télémétrie ULB, deux dispositifs (ou plus, par exemple ceux 10, 11, 12 de la Figure 1) échangent des trames ULB, l'un ou l'autre ou les deux réalisent les étapes suivantes pour obtenir des mesures télémétriques.

A l'étape 500, le dispositif reçoit un signal radio ULB d'un autre dispositif et obtient une réponse impulsionnelle de canal (CIR) à partir du signal radio reçu. Des pré-traitements de la CIR peuvent être effectués afin d'en améliorer la qualité à des fins télémétriques.

A l'étape 510, le dispositif utilise le classifieur d'environnement 241 pour déterminer une classe d'environnement ENV_ID classant un environnement du dispositif électronique recevant le signal radio. Dans des modes de réalisation décrits ci-dessus, il s'agit de l'exécution d'un ou plusieurs modèles d'IA entrainés, en utilisant comme entrée la CIR obtenue, éventuellement via l'unité d'extraction de caractéristiques 23.

Puis à l'étape 520, le dispositif utilise le deuxième classifieur LOS/NLOS 242 pour déterminer une visibilité directe (LOS) ou indirecte (NLOS). Cette détermination est réalisée par l'exécution d'un modèle d'IA (entrainé) en fonction de la CIR (directement et/ou via des caractéristiques extraites et/ou via la sortie du CNN 241b) et de la classe d'environnement déterminée.

L'indication LOS ou NLOS ainsi obtenue peut être fournie en entrée de l'unité de télémétrie 25.

Le classifieur à double étage tel que décrit ci-dessus permet avantageusement en utilisation du même modèle de classification LOS/NLOS dans un large éventail d'environnements différents de progression du dispositif de mesure. Et cela, sans avoir à charger un nouveau modèle de classification ou à entraîner à nouveau le modèle de classification intégré au dispositif.

La **Figure 6** illustre une architecture matérielle pour un dispositif 10, 11, 12 de la **Figure 1****.** Elle comprend un bus de communication 601 auquel sont préférablement connectés :
- une ou plusieurs unités centrales de traitement 602, telles qu'un ou des processeurs CPU et/ou un ou des microprocesseurs ;
- une mémoire de stockage 603, de type ROM et/ou mémoire flash, pour le stockage de programmes informatiques destinés à mettre en œuvre tout ou partie des opérations décrites ci-dessus ;
- une mémoire vive 604, de type RAM, pour le stockage du code exécutable des programmes informatiques ainsi que les registres adaptés pour enregistrer des variables et des paramètres nécessaires à leur exécution ;
- une interface de communication 605, notamment de type ULB pour émettre et recevoir des signaux radio ULB, en particulier dans le cadre d'opérations de télémétrie ; et
- une ou plusieurs entrées/sorties I/O 606 permettant à un opérateur d'interagir avec les programmes informatiques.

Le bus de communication 601 assure la communication et l'interopérabilité entre les différents éléments inclus dans le dispositif 600 ou connectés à celui-ci.

L'unité centrale 602 est de préférence adaptée pour contrôler et diriger l'exécution des instructions ou des parties de code logiciel du ou des programmes informatiques. À la mise sous tension, le ou les programmes qui sont stockés en mémoire non volatile 603 sont transférés/chargés dans la mémoire vive 604, qui contient alors le code exécutable du ou des programmes, ainsi que des registres pour le stockage des variables et des paramètres nécessaires à la mise en œuvre des procédés décrits.

Des tests ont pu être menés à l'aide d'un dispositif conforme à l'architecture de la Figure 4, entrainé à l'aide des données d'entrainement utilisées dans les trois publications suivantes : Bregar et al. 2018 (« Improving Indoor Localization Using Convolutional Neural Networks on Computationally Restricted Devices », IEEE Access Volume: 6, pp.17429-17441), Fontaine et al. 2020 (« Edge Inference for UWB Ranging Error Correction Using Autoencoders » ; IEEE Access Volume: 8, pp.139143-139155), et Bregar et al. 2023 (« Indoor UWB Positioning and Position Tracking Data Set », Scientific Data volume 10, Article number: 744) ; puis avec un jeu propre de 45 000 entrées environ correspondant à des situations LOS et NLOS en intérieur (open-space) et extérieur (parking en champ ouvert)..

Les caractéristiques CIR et les caractéristiques basées sur le CIR suffisent à classer les environnements, ce qui permet ensuite d'affiner le classifieur LOS/NLOS. Les caractéristiques utilisées comprenaient : l'énergie de la CIR, l'énergie de pic, la moyenne de retard (MED), la dispersion de retard (RMS Delay Spread), l'écart type (STD), le rapport signal sur bruit (SNR), le coefficient d'asymétrie S (ou skewness) et le coefficient d'acuité K (ou kurtosis).

Les résultats de ces tests ont été comparés à ceux d'un classifieur LOS/NLOS classiques entraîné avec les mêmes données, sans connaissance de l'environnement.

Il en est ressorti des performances de classification NLOS nettement plus élevées avec la prise en compte de l'environnement, que les performances du classifieur LOS/NLOS classique (non sensible à l'environnement), de l'ordre de 10 à 15 pts.

En particulier, il en est ressorti des performances de classification d'environnement robustes, supérieures à 95%, permettant une utilisation fiable de cette information (ENV_ID) par le classifieur LOS/NLOS.

Bien entendu, la présente divulgation ne se limite pas aux formes de réalisation décrites ci-avant à titre d'exemples ; elle s'étend à d'autres variantes. D'autres réalisations sont possibles.

## Revendications

1. Dispositif électronique (10, 11, 12, 20) comprenant :
une unité de communication (21) configurée pour recevoir un signal radio et obtenir une réponse impulsionnelle de canal (CIR) à partir du signal radio,
une unité de pré-classification (241) configurée pour classer un environnement du dispositif électronique recevant le signal radio, et
un modèle d'intelligence artificielle (IA) de classification LOS/NLOS (242) configuré pour déterminer une visibilité directe (LOS) ou indirecte (NLOS) en fonction de la CIR et de la classe d'environnement (ENV_ID) déterminée par l'unité de pré-classification.

2. Dispositif selon la revendication 1, dans lequel l'unité de pré-classification (241) comprend un modèle d'IA de classification d'environnement configuré pour déterminer une classe d'environnement (ENV_ID) du dispositif électronique à partir de la CIR.

3. Dispositif selon la revendication 1 ou 2, dans lequel l'unité de pré-classification (241) comprend un réseau neuronal convolutif (CNN) (241a) en cascade avec un modèle d'IA de classification d'environnement du dispositif électronique (241b) configuré pour déterminer une classe d'environnement (ENV_ID), le CNN (241a) recevant en entrée la CIR.

4. Dispositif selon la revendication 3, dans lequel le modèle d'IA de classification d'environnement (241b) reçoit, outre la sortie du CNN, un premier jeu (SET_1) de caractéristiques extraites de la CIR.

5. Dispositif selon la revendication 3 ou 4, dans lequel le CNN (241a) et le modèle d'IA de classification d'environnement (241b) sont entraînés conjointement, à partir d'un ensemble de données labelisant des CIRs avec des classes d'environnement.

6. Dispositif selon l'une des revendications 3 à 5, dans lequel le modèle de classification LOS/NLOS (242) reçoit en entrée la sortie du CNN (241a) et un deuxième jeu (SET_2) de caractéristiques extraites de la CIR.

7. Dispositif selon l'une des revendications 3 à 6, dans lequel le modèle de classification LOS/NLOS (242) est entraîné, une fois le CNN (241a) et le modèle d'IA de classification d'environnement (241b) entraînés.

8. Dispositif selon l'une des revendications 1 à 7, dans lequel la classe d'environnement (ENV_ID) déterminée est fournie comme entrée de modèle du modèle d'IA de classification LOS/NLOS (242).

9. Dispositif selon l'une des revendications 1 à 7, dans lequel la classe d'environnement déterminée (ENV_ID) est fournie comme paramètre de modulation du modèle d'IA de classification LOS/NLOS (242), par exemple comme biais ou comme facteur de modification du poids d'une ou plusieurs connexions dans un réseau neuronal formant modèle d'IA de classification LOS/NLOS.

10. Procédé de communication comprenant les étapes suivantes, dans un dispositif électronique (10, 11, 12, 20) :
obtenir (500) une réponse impulsionnelle de canal (CIR) à partir d'un signal radio reçu,
déterminer (510) une classe d'environnement (ENV_ID) classant un environnement du dispositif électronique recevant le signal radio, et
utiliser (520) un modèle de classification (242) pour déterminer une visibilité directe (LOS) ou indirecte (NLOS) en fonction de la CIR et de la classe d'environnement déterminée.
